# EUROPEAN PATENT APPLICATION

(11) **EP 4 832 647 A1**
(43) Date of publication of application: **28.10.2026**
(21) Application number: 24906327.2
(22) Date of filing: 17.12.2024
(51) Int. Cl.: H04W 74/0833

(54) **RESOURCE DETERMINATION METHOD AND APPARATUS, CONFIGURATION METHOD AND APPARATUS, TERMINAL, AND NETWORK SIDE DEVICE**

(30) Priority: 22.12.2023 CN 202311792962
(71) Applicant: Vivo Mobile Communication Co., Ltd., Dongguan, Guangdong 523863 (CN)
(72) Inventor: LIN, Zhipeng, Dongguan, Guangdong 523863 (CN); CHEN, Xiaohang, Dongguan, Guangdong 523863 (CN); LU, Zhi, Dongguan, Guangdong 523863 (CN)
(74) Representative: dompatent
(86) International application number: PCT/CN2024/139811
(87) International publication number: WO 2025/130846

(57) **Abstract**

Disclosed are a method for determining a resource, a method for configuration, an apparatus, a terminal, and a network-side device, which belong to the technical field of communication. The method for determining a resource in the embodiments of the present disclosure includes: determining, by a terminal according to first information, a PRACH occasion (RO) group used for physical random access channel (PRACH) repetition transmission, where the first information includes at least one of the following: a duplex capability of the terminal; measurement metric values of downlink signals associated with different types of RO groups; a preamble selected by the terminal; an RO corresponding to first PRACH transmission by the terminal; an RO resource configured on an enhanced-duplex uplink resource and a non-enhanced-duplex uplink resource, or an RO resource configured on a non-enhanced-duplex uplink resource, or an RO resource configured on an enhanced-duplex uplink resource; first configuration information related to a preamble on an RO; and a first association pattern period or a second association pattern period of a downlink signal to the RO.

## Description

### CROSS-REFERENCE TO RELATED APPLICATIONS

The present disclosure claims the benefit of priority to Chinese Patent Application No. 202311792962.0, filed with the China National Intellectual Property Administration on December 22, 2023 and entitled "METHOD FOR DETERMINING RESOURCE, METHOD FOR CONFIGURATION, APPARATUS, TERMINAL, AND NETWORK-SIDE DEVICE", which is incorporated in its entirety herein by reference.

### TECHNICAL FIELD

The present disclosure belongs to the technical field of communication, and particularly relates to a method for determining a resource, a method for configuration, an apparatus, a terminal, and a network-side device.

### BACKGROUND

To adapt to requirements of diversified scenarios and services, enhanced duplex is introduced to a mobile communication system. In the enhanced duplex mode, it is mainly considered that a network side supports full duplex, and a terminal side supports half duplex. Moreover, physical random access channel (Physical Random Access Channel, PRACH) sending is supported on a newly-configured subband. However, it is not clear at present how to determine a PRACH resource used for PRACH repetition transmission to support terminals having various duplex capabilities.

### SUMMARY

The embodiments of the present disclosure provide a method for determining a resource, a method for configuration, an apparatus, a terminal, and a network-side device, which can solve the problem of how to determine a physical random access channel (PRACH) resource used for PRACH repetition transmission.

In a first aspect, a method for determining a resource is provided. The method for determining a resource is performed by a terminal and includes:
determining, by the terminal according to first information, a PRACH occasion (RO) group used for PRACH repetition transmission.

The first information includes at least one of the following:
a duplex capability of the terminal;
measurement metric values of downlink signals associated with different types of RO groups;
a preamble (preamble) selected by the terminal;
an RO corresponding to first PRACH transmission by the terminal;
an RO resource configured on an enhanced-duplex uplink resource and a non-enhanced-duplex uplink resource, or an RO resource configured on a non-enhanced-duplex uplink resource, or an RO resource configured on an enhanced-duplex uplink resource;
first configuration information related to a preamble on an RO; and
a first association pattern period or a second association pattern period of a downlink signal to the RO.

In a second aspect, a method for configuration is provided. The method for configuration is performed by a network-side device and includes:
sending, by the network-side device, configuration information to a terminal.

The configuration information includes at least one of the following:
first configuration information related to a preamble on an RO;
second configuration information used for configuring a PRACH resource of a first RO, where the first RO is used for PRACH repetition transmission by a terminal that supports one or more types of enhanced duplex and PRACH repetition transmission by a terminal that does not support enhanced duplex, and the PRACH resource is used for the PRACH repetition transmission by the terminal that does not support enhanced duplex;
third configuration information used for configuring a time window of an RO group, where the time window includes one or more first association pattern periods of a downlink signal to the RO, or the time window includes one or more second association pattern periods of the downlink signal to the RO; and
fourth configuration information used for configuring an RO resource on an enhanced-duplex uplink resource or a non-enhanced-duplex uplink resource.

In a third aspect, an apparatus for determining a resource is provided. The apparatus for determining a resource is applied to a terminal and includes:
a determining module configured to determine, according to first information, an RO group used for PRACH repetition transmission. The first information includes at least one of the following:
a duplex capability of a terminal;
measurement metric values of downlink signals associated with different types of RO groups;
a preamble (preamble) selected by the terminal;
an RO corresponding to first PRACH transmission by the terminal;
an RO resource configured on an enhanced-duplex uplink resource and a non-enhanced-duplex uplink resource, or an RO resource configured on a non-enhanced-duplex uplink resource, or an RO resource configured on an enhanced-duplex uplink resource;
first configuration information related to a preamble on an RO; and
a first association pattern period or a second association pattern period of a downlink signal to the RO.

In a fourth aspect, an apparatus for configuration is provided. The apparatus for configuration is applied to a network-side device and includes:
a sending module configured to send configuration information to a terminal.

The configuration information includes at least one of the following:
first configuration information related to a preamble on an RO;
second configuration information used for configuring a PRACH resource of a first RO, where the first RO is used for PRACH repetition transmission by a terminal that supports one or more types of enhanced duplex and PRACH repetition transmission by a terminal that does not support enhanced duplex, and the PRACH resource is used for the PRACH repetition transmission by the terminal that does not support enhanced duplex;
third configuration information used for configuring a time window of an RO group, where the time window includes one or more first association pattern periods of a downlink signal to the RO, or the time window includes one or more second association pattern periods of the downlink signal to the RO; and
fourth configuration information used for configuring an RO resource on an enhanced-duplex uplink resource or a non-enhanced-duplex uplink resource.

In a fifth aspect, a terminal is provided. The terminal includes a processor and a memory. The memory stores a program or instructions capable of being run on the processor. The program or the instructions, when executed by the processor, implement steps of the method as mentioned in the first aspect.

In a sixth aspect, a terminal is provided. The terminal includes a processor and a communication interface. The processor is configured to determine, according to first information, an RO group used for PRACH repetition transmission. The first information includes at least one of the following: a duplex capability of the terminal; measurement metric values of downlink signals associated with different types of RO groups; a preamble (preamble) selected by the terminal; an RO corresponding to first PRACH transmission by the terminal; an RO resource configured on an enhanced-duplex uplink resource and a non-enhanced-duplex uplink resource, or an RO resource configured on a non-enhanced-duplex uplink resource, or an RO resource configured on an enhanced-duplex uplink resource; first configuration information related to a preamble on an RO; and a first association pattern period or a second association pattern period of a downlink signal to the RO.

In a seventh aspect, a network-side device is provided. The network-side device includes a processor and a memory. The memory stores a program or instructions capable of being run on the processor. The program or the instructions, when executed by the processor, implement steps of the method mentioned in the second aspect.

In an eighth aspect, a network-side device is provided. The network-side device includes a processor and a communication interface. The communication interface is used for sending configuration information to a terminal. The configuration information includes at least one of the following: first configuration information related to a preamble on an RO; second configuration information used for configuring a PRACH resource of a first RO, where the first RO is used for PRACH repetition transmission by a terminal that supports one or more types of enhanced duplex and a terminal that does not support enhanced duplex, and the PRACH resource is used for the PRACH repetition transmission by the terminal that does not support enhanced duplex; third configuration information used for configuring a time window of an RO group, where the time window includes one or more first association pattern periods of a downlink signal to the RO, or the time window includes one or more second association pattern periods of the downlink signal to the RO; and fourth configuration information used for configuring an RO resource on an enhanced-duplex uplink resource or a non-enhanced-duplex uplink resource.

In a ninth aspect, a readable storage medium is provided. The readable storage medium stores a program or instructions. The program or instructions, when executed by a processor, implement steps of the method mentioned in the first aspect, or implement steps of the method mentioned in the second aspect.

In a tenth aspect, a wireless communication system is provided. The wireless communication system includes a terminal and a network-side device. The terminal may be configured to perform steps of the method mentioned in the first aspect. The network-side device may be configured to perform steps of the method mentioned in the second aspect.

In an eleventh aspect, a chip is provided. The chip includes a processor and a communication interface. The communication interface is coupled to the processor. The processor is configured to run a program or instructions, to implement steps of the method mentioned in the first aspect, or implement steps of the method mentioned in the second aspect.

In a twelfth aspect, a computer program/program product is provided. The computer program/program product is stored in a storage medium. The computer program/program product, when executed by at least one processor, implements steps of the method mentioned in the first aspect, or implements steps of the method mentioned in the second aspect.

In a thirteenth aspect, a terminal is provided. The terminal is configured to implement steps of the method mentioned in the first aspect.

In a fourteenth aspect, a network-side device is provided. The network-side device is configured to implement steps of the method mentioned in the second aspect.

Through the solutions of the embodiments of the present disclosure, an RO group used for PRACH repetition transmission can be determined by combining information such as a duplex capability of a terminal, measurement metric values of downlink signals associated with different types of RO groups, a preamble (preamble) selected by the terminal, an RO resource configured on an enhanced-duplex uplink resource or a non-enhanced-duplex uplink resource, and configuration information related to a preamble on an RO. Thus, a terminal that supports enhanced duplex, a terminal that does not support enhanced duplex, and a terminal that supports different types of enhanced duplex can be considered, to improve robustness of PRACH transmission.

### BRIEF DESCRIPTION OF THE DRAWINGS

FIG. 1 is a block diagram of an applicable wireless communication system according to an embodiment of the present disclosure;
FIG. 2 is a schematic diagram of classification of PRACH occasion (RO) groups according to an embodiment of the present disclosure;
FIG. 3 is a flowchart of a method for determining a resource according to an embodiment of the present disclosure;
FIG. 4A, FIG. 4B, and FIG. 4C are schematic diagrams of preamble configuration methods according to embodiments of the present disclosure;
FIG. 5 is a flowchart of a method for configuration according to an embodiment of the present disclosure;
FIG. 6 is a schematic structural diagram of an apparatus for determining a resource according to an embodiment of the present disclosure;
FIG. 7 is a schematic structural diagram of an apparatus for configuration according to an embodiment of the present disclosure;
FIG. 8 is a schematic structural diagram of a device for communication according to an embodiment of the present disclosure;
FIG. 9 is a schematic structural diagram of a terminal according to an embodiment of the present disclosure; and
FIG. 10 is a schematic structural diagram of a network-side device according to an embodiment of the present disclosure.

### DETAILED DESCRIPTION

The technical solutions of the embodiments of the present disclosure are clearly described below in combination with the accompanying drawings in the embodiments of the present disclosure. Apparently, the described embodiments are merely some embodiments rather than all embodiments of the present disclosure. All other embodiments obtained by those of ordinary skill in the art based on the embodiments of the present disclosure all fall within the scope of protection of the present disclosure.

The terms "first", "second", etc. in the present disclosure are used for distinguishing similar objects, but are not used for describing a specific sequence or order. It should be understood that terms so used can be interchanged under appropriate circumstances such that the embodiments of the present disclosure can be implemented in a sequence other than those illustrated or described herein. Moreover, the objects distinguished by "first" and "second" generally belong to one type. A number of objects is not limited. For example, one or more first objects can be arranged. In addition, "or" in the present disclosure indicates at least one of connected objects. For example, "A or B" covers three solutions, that is, solution 1: including A and excluding B; solution 2: including B and excluding A; and solution 3: including both A and B. The character ''/'' generally denotes an ''or'' relationship between the associated objects.

The term "indication" in the present disclosure may be a direct indication (or an explicit indication), or may be an indirect indication (or an implicit indication). The direct indication may be understood as that a sending party explicitly notifies a receiving party of content such as specific information, an operation required to be performed, or a request result in a sent indication. The indirect indication may be understood as that a receiving party determines corresponding information based on an indication sent by a sending party, or performs determination and determines, based on a determination result, an operation required to be performed, a request result, etc.

It should be noted that the technologies described in the embodiments of the present disclosure are not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of the present disclosure are often interchangeably used. The described technologies may be used for systems and radio technologies mentioned above as well as for other systems and radio technologies. A new radio (New Radio, NR) system is described for an exemplary purpose in the following descriptions, and the term NR is used in most of the following descriptions. However, these technologies may be further applied to communication systems other than the NR system, such as a 6th generation (6th Generation, 6G) communication system, and subsequently evolved communication systems.

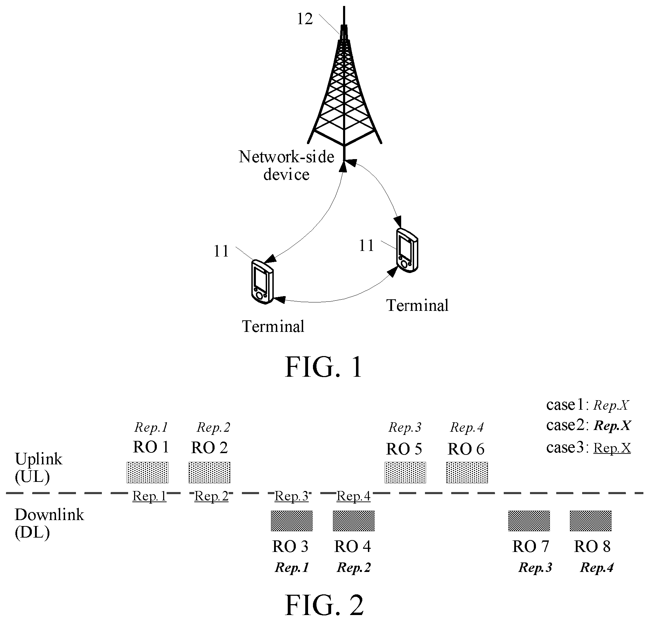

FIG. 1 shows a block diagram of an applicable wireless communication system according to an embodiment of the present disclosure. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a ship-borne device, pedestrian user equipment (Pedestrian User Equipment, PUE), a smart home (a home device having a wireless communication function, such as a refrigerator, a television, a washing machine, and furniture), a game machine, a personal computer (Personal Computer, PC), a teller machine, and a self-service machine. The wearable device includes a smartwatch, a smart wristband, a smart earphone, smart glasses, a smart ornament (a smart bracelet, a smart hand chain, a smart ring, a smart necklace, a smart anklet, a smart foot chain, etc.), a smart wrist strap, smart clothing, etc. The vehicle user equipment may alternatively be referred to as a vehicle terminal, a vehicle controller, a vehicle module, a vehicle component, a vehicle chip, a vehicle unit, etc. It should be noted that the specific type of the terminal 11 is not limited in the embodiments of the present disclosure. The network-side device 12 may include an access network device or a core network device. The access network device may alternatively be referred to as a radio access network (Radio Access Network, RAN) device, a radio access network function, or a radio access network unit. The access network device may include a base station, a wireless local area network (Wireless Local Area Network, WLAN) access point (Access Point, AP), a Wireless Fidelity (Wireless Fidelity, WiFi) node, etc. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or another appropriate term in the field. Provided that the same technical effect is achieved, the base station is not limited to specific technical terms.

To understand the embodiments of the present disclosure conveniently, the following content is described at first.

In the embodiments of the present disclosure, a PRACH transmission occasion (PRACH transmission occasion) may alternatively be referred to as a PRACH occasion (PRACH Occasion), which is referred to as an RO for short.

Optionally, ROs of a plurality of frequency division multiplexing (Frequency Division Multiplexing, FDM) may be configured at a time domain position for transmitting a PRACH. At a moment, a plurality of ROs may be used for performing the FDM.

Optionally, the RO and an actually sent synchronization signal block (SSB) (synchronization signal (SS)/physical broadcast channel (PBCH) block, which is sometimes directly referred to as an SS block for short) have an association relationship. One SSB may be associated with a plurality of ROs, or a plurality of SSBs may be associated with one RO. In a case that a plurality of SSBs are associated with one RO, different SSBs correspond to different preambles (Preamble). The base station may send different SSBs by using different beams, and a corresponding terminal sends a preamble on an RO associated with the SSB. That is, the RO and the preamble have an association relationship. For example, the preamble may be transmitted only on an RO resource configured through a particular parameter (such as a parameter *PRACHConfigurationIndex*), and the preamble may be transmitted only on a frequency domain resource configured through a particular parameter (such as a parameter *prach-FDM*).

In the embodiments of the present disclosure, enhanced duplex, duplex that is enhanced, a mode of duplex that is enhanced, cross division duplex (XDD), full duplex that is enhanced, a mode of full duplex that is enhanced, etc. may represent one concept, which may be represented as supporting uplink subband transmission in a downlink time unit, and/or supporting downlink subband transmission in an uplink time unit, and/or supporting at least one of the uplink subband transmission and the downlink subband transmission in a flexible time unit, and/or supporting uplink or downlink resource transmission in a set of at least two of the above three time units (that is, the downlink time unit, the uplink time unit, and the flexible time unit). The time unit includes but is not limited to a slot, a symbol, a subband, etc.

In the embodiments of the present disclosure, the RO may include an RO resource spanning at least two types of time units.

In the embodiments of the present disclosure, mapping from an SSB to an RO may alternatively refer to a generalized association between a downlink signal and an uplink signal/resource, such as a mapping relationship of a channel state information reference signal (Channel State Information Reference Signal, CSI-RS) to an RO.

In the embodiments of the present disclosure, a random access channel (Random Access Channel, RACH) occasion (RO) and a PRACH occasion may both refer to time-frequency resources required for sending one PRACH sequence. An RA or a random access may both refer to a random access process.

In the embodiments of the present disclosure, the SSB and the SS/PBCH block may be interchangeably used, may be referred to as other names, and may refer to any module including at least some synchronization signals, broadcast signals, or other downlink broadcast signals.

In the embodiments of the present disclosure, the PRACH resource may include a PRACH time-frequency resource and/or a PRACH sequence.

In the embodiments of the present disclosure, a shared RO may refer to that a PRACH sequence used for one type of PRACH transmission, and a PRACH sequence used for another type of PRACH transmission both exist. A separate RO or a separately configured (separately configured) RO may refer to an additionally configured PRACH occlusion only used for different types of PRACH transmission.

In the embodiments of the present disclosure, PRACH repetition transmission refers to repetition transmission performed during each time of PRACH initial transmission or each time of PRACH retransmission.

In the embodiments of the present disclosure, to support a terminal that supports one or more types of enhanced duplex in PRACH repetition transmission, and in consideration of PRACH repetition transmission by a terminal that does not support enhanced duplex, a plurality of sets of PRACH repetition transmission resources may be divided. For example, a plurality of types of RO groups (that is, RO group) are formed. Different types of RO groups may be used for PRACH repetition transmission by a terminal that supports different types of enhanced duplex, or may be used for PRACH repetition transmission by a terminal that supports enhanced duplex and a terminal that does not support enhanced duplex. A specific RO group type may depend on a network configuration. For example, as shown in FIG. 2, RO groups can be classified into three types. One type is a case 1, which includes only ROs in an uplink (UL) time unit (such as an uplink slot), for example, includes an RO1, an RO2, an RO5, and an RO6 in FIG. 2, which correspond to four times of repetition transmission, that is, Rep.1, Rep.2, Rep.3, and Rep.4 respectively. Another type is a case 2, which includes only ROs on a downlink (DL) time unit (such as an uplink subband of a downlink slot), for example, includes an RO3, an RO4, the RO5, and the RO6 in FIG. 2, which correspond to four times of repetition transmission, that is, the Rep.1, the Rep.2, the Rep.3, and the Rep.4 respectively. Still another type is a case 3, which includes the ROs on the UL time unit (such as the uplink slot) and the ROs on the DL time unit (such that the uplink subband of the downlink slot), for example, includes the RO1, the RO2, the RO3, and the RO4 in FIG. 2, and correspond to four times of repetition transmission, that is, the Rep.1, the Rep.2, the Rep.3, and the Rep.4 respectively. In a case that different types of RO groups include a same RO, some preamble resources are required to be reserved to be used for different examples respectively.

A method for determining a resource, an apparatus, a terminal, and a network-side device provided in the embodiments of the present disclosure are described in detail below in combination with the accompanying drawings and through some embodiments and their application scenarios.

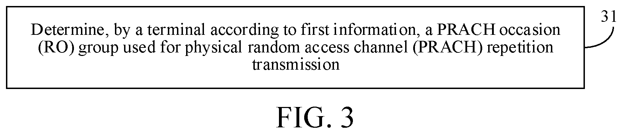

With reference to FIG. 3, a flowchart of a method for determining a resource according to an embodiment of the present disclosure is shown in FIG. 3. The method for determining a resource is performed by a terminal. As shown in FIG. 3, the method for determining a resource includes the following steps.

Step 31: the terminal determines, according to first information, an RO group used for PRACH repetition transmission.

In the embodiments of the present disclosure, the terminal may be in an idle (idle) state or an inactive (inactive) state. To improve flexible usage of a duplex mode by the terminal in the idle state or the inactive state, a mode of duplex that is enhanced may be configured in the idle state or the inactive state of the terminal, or may be dynamically configured in a random access stage. Enhanced duplex may be but is not limited to frequency division duplex (Frequency Division Duplex, FDD) that is enhanced, time division duplex (Time Division Duplex, TDD) that is enhanced, subbands non-overlapping full duplex (subbands non-overlapping Full duplex, SBFD), etc.

Optionally, the first information includes but is not limited to at least one of the following:
a duplex capability of the terminal, where for example, a terminal that supports an enhanced full duplex capability may use an RO group corresponding to the case 1, the case 2, or the case 3 in FIG. 2 to perform PRACH repetition transmission; and an association relationship between a specific RO group type and a terminal that supports different types of enhanced duplex and a terminal that does not support enhanced duplex may depend on a network configuration;
measurement metric values of downlink signals associated with different types of RO groups, where the measurement metric value includes but is not limited to reference signal received power (Reference Signal Received Power, RSRP), reference signal received quality (Reference Signal Received Quality, RSRQ), a signal to interference plus noise ratio (Signal to Interference plus Noise Ratio, SINR), etc., and function operation of at least two of the RSRP, the RSRP, and the SINR; for example, the terminal may select, according to relative magnitudes of different synchronization signal-based RSRP (SS-RSRP) thresholds associated with the different types of RO groups, a corresponding RO group to perform the PRACH repetition transmission;
a preamble (preamble) selected by the terminal, where for example, a corresponding RO group may be selected, according to different types of preambles on ROs selected by the terminal through random access or downlink measurement, to perform the PRACH repetition transmission; for example, as shown in FIG. 2, in a case that a preamble X is selected on the RO1, an RO group corresponding to the case 3 may be selected to perform the PRACH repetition transmission; or, in a case that a preamble Y is selected on the RO1, an RO group corresponding to the case 1 may be selected to perform the PRACH repetition transmission;
an RO corresponding to first PRACH transmission by the terminal, where a corresponding RO is selected according to the RO corresponding to the first PRACH transmission by the terminal to perform the PRACH repetition transmission; that is, an RO corresponds to a particular RO group/repetition transmission;
an RO resource configured on an enhanced-duplex uplink resource and a non-enhanced-duplex uplink resource, or an RO resource configured on a non-enhanced-duplex uplink resource, or an RO resource configured on an enhanced-duplex uplink resource;
first configuration information related to a preamble on an RO; and
a first association pattern period or a second association pattern period of a downlink signal to the RO, where for example, the downlink signal may be an SSB, or a channel state information-reference signal (CSI-RS), or another signal that is used for the downlink measurement and associated with PRACH transmission.

In some embodiments, in cases of a plurality of types of RO groups, the terminal may select a corresponding RO group/RO group type according to at least one of the following: a duplex capability of the terminal, measurement metric values of downlink signals associated with different types of RO groups, a preamble (preamble) selected by the terminal, and an RO corresponding to first PRACH transmission by the terminal.

In some embodiments, a terminal that supports one or more types of enhanced duplex and a terminal that does not support enhanced duplex can determine respective RO groups used for PRACH repetition transmission according to at least one of the following: an RO resource configured on an enhanced-duplex uplink resource and a non-enhanced-duplex uplink resource, the RO resource configured on the non-enhanced-duplex uplink resource, and the RO resource configured on the enhanced-duplex uplink resource.

In some embodiments, the terminal that does not support enhanced duplex can separately determines an RO group used for the PRACH repetition transmission according to only the RO resource configured on the non-enhanced-duplex uplink resource. That is, the terminal that does not support enhanced duplex, when determining a required RO group, ignores the RO resource configured on the enhanced-duplex uplink resource.

It should be noted that the enhanced-duplex uplink resource may refer to a transmission resource supporting an uplink subband in a downlink time unit, and/or a transmission resource supporting a downlink subband in an uplink time unit, and/or a transmission resource supporting at least one of uplink subband transmission and downlink subband transmission in a flexible time unit. The time unit may be a slot, a symbol, etc. The non-enhanced-duplex uplink resource refers to another time-frequency resource used for PRACH transmission.

The first association pattern period and the second association pattern period may be used for determining a time window of the RO group. For example, s (s is greater than 0) first association pattern periods or second association pattern periods constitute the time window of the RO group. Then, in the time window, a required RO group can be determined by using an RO group overall determination rule. For example, assuming that a number of PRACH repetition is N1, an RO group overall determination rule in a time window may be as follows: firstly, a starting RO (starting RO) of a first RO group is determined, and remaining N-1 ROs of the first RO group are determined. Then, starting ROs and remaining ROs of other RO groups are sequentially determined, and remaining N1-1 ROs of each RO group are ROs that are associated with a same SSB with a starting RO, have a same relative frequency position, and have a same associated preamble set. After the first RO group is determined, determination of the remaining RO groups is related to whether a time offset (time offset) is configured. It should be noted that the RO group overall determination rule may be agreed on through a protocol, preconfigured, etc.

Through the solutions of the embodiments of the present disclosure, an RO group used for PRACH repetition transmission can be determined by combining information such as a duplex capability of a terminal (such as consideration of whether the terminal supports enhanced duplex), measurement metric values of downlink signals associated with different types of RO groups, a preamble (preamble) selected by the terminal, an RO resource configured on an enhanced-duplex uplink resource or a non-enhanced-duplex uplink resource, and configuration information related to a preamble on an RO. Thus, a terminal that supports enhanced duplex, a terminal that does not support enhanced duplex, and a terminal that supports different types of enhanced duplex can be considered, to improve robustness of PRACH transmission. In addition, an RO group used for PRACH repetition transmission is determined through the information. Thus, the network-side device can perform, when detecting a PRCH for a terminal that supports enhanced duplex or a terminal that does not support enhanced duplex, or detecting a PRCH for a terminal that supports different types of enhanced duplex, detection on an RO resource corresponding to a capability of the terminal, and is not required to perform detection on all RO resources, thereby reducing complexity of detecting a PRCH by a network to some extent.

Optionally, the method for determining a resource in the embodiments of the present disclosure may further include:
the terminal receives second configuration information sent from a network-side device. The second configuration information is used for configuring a PRACH resource of a first RO, the first RO is used for PRACH repetition transmission by the terminal that supports one or more types of enhanced duplex and the terminal that does not support enhanced duplex, and the PRACH resource is used for the PRACH repetition transmission by the terminal that does not support enhanced duplex. That is, when an RO is used by both the terminal that supports one or more types of enhanced duplex and the terminal that does not support enhanced duplex to perform PRACH repetition transmission, some PRACH resources are reserved for the terminal that does not support enhanced duplex to perform PRACH repetition transmission. The PRACH resource is, for example, a PRACH sequence. Thus, the PRACH repetition transmission by the terminal that does not support enhanced duplex can be ensured.

In the embodiments of the present disclosure, if the terminal that does not support enhanced duplex, that is, a terminal that only supports non-enhanced duplex, determines an RO group used for PRACH repetition transmission according to an RO resource configured on an enhanced-duplex uplink resource and a non-enhanced-duplex uplink resource, at least one of the following steps can be performed.
1) If a second RO in the RO group is on the enhanced-duplex uplink resource, the terminal determines that the second RO is invalid or the second RO is not used for PRACH repetition transmission. That is, in a case that an RO in a determined RO group is on the enhanced-duplex uplink resource, the terminal determines/considers that the RO is invalid or the RO is not used for PRACH repetition transmission.
2) If an X^{th} RO in the RO group is on the enhanced-duplex uplink resource, the terminal determines that the RO is invalid or the RO is not used for PRACH repetition transmission. Specifically, X is an integer greater than 0. For example, X is equal to 1. That is, in a case that a first RO in a determined RO group is on the enhanced-duplex uplink resource, the terminal determines/considers that the RO group is invalid or the RO group is not used for PRACH repetition transmission.
3) If at least Y ROs in the RO group are on the enhanced-duplex uplink resource, the terminal determines that the RO is invalid or the RO is not used for PRACH repetition transmission. Specifically, Y is an integer greater than 0. For example, Y may be preconfigured, or may be determined according to a number N of times of repetition transmission. For example, Y = N/2.
4) If the RO group includes an RO on the enhanced-duplex uplink resource and an RO on the non-enhanced-duplex uplink resource, the terminal performs PRACH repetition transmission by using different PRACH sequences. In this way, a network can flexibly configure PRACH sequence for different terminal types on the two types of ROs.

In the embodiments of the present disclosure, different types of preambles may be defined, to be used for PRACH transmission by a terminal that does not support enhanced duplex, or to be used for PRACH transmission by a terminal that supports one or more types of enhanced duplex. Thus, corresponding RO groups can be determined based on the different types of preambles.

Optionally, the embodiment includes at least type 1 preambles and type 2 preambles. The type 1 preambles are used for PRACH transmission by a terminal that does not support enhanced duplex. The type 2 preambles are used for PRACH transmission by a terminal that supports one or more types of enhanced duplex. Or, the type 1 preambles are used for PRACH transmission by a terminal type 1. The type 2 preambles are used for PRACH transmission by a terminal type 2. The terminal type 1 supports one or more types of enhanced duplex. The terminal type 2 supports one or more types of enhanced duplex different from the enhanced duplex supported by the terminal type 1. That is, different types of preambles are used for PRACH transmission by a terminal that supports different types of enhanced duplex. Definitions of the type 1 preambles and definitions of the type 2 preambles may be exchanged.

Optionally, the above first configuration information related to a preamble on an RO may be used for at least one of the following:
configuring a total number of type 1 preambles on the RO;
configuring a number of preambles that are mapped to each synchronization signal block (SSB) and used for contention based random access (CBRA) among the type 1 preambles on the RO;
configuring a total number of type 2 preambles on the RO;
configuring a starting preamble identity (such as a starting preamble ID) of the type 2 preambles on the RO;
configuring a number of preambles that are mapped to each SSB and used for the CBRA among the type 2 preambles on the RO;
configuring an interval between a set of the type 1 preambles and a set of the type 2 preambles, where for example, a preamble after N preambles reserved after a last preamble of the type 1 preambles is a type 2 preambles, that is, a first type 2 preambles and the last type 1 preambles have an offset (offset);
configuring a total number of preambles that are used for the CBRA and contention free random access (CFRA) among the type 1 preambles on the RO, where for example, a total number of preambles that are used for normal CBRA and normal CFRA among the type 1 preambles on the RO may be configured; thus, a number of preambles that are used for another purpose such as a system information request (SI request) among the type 1 preambles is equal to the total number of the type 1 preambles minus the total number of the preambles that are used for the CBRA and the CFRA among the type 1 preambles; and
configuring a total number of preambles that are used for the CBRA and the CFRA among the type 2 preambles on the RO, where for example, a total number of preambles that are used for the normal CBRA and the normal CFRA among the type 2 preambles on the RO may be configured; thus, a number of preambles that are used for another purpose such as the SI request among the type 2 preambles is equal to the total number of the type 2 preambles minus the total number of the preambles that are used for the CBRA and the CFRA among the type 2 preambles.

Thus, through configuration of different types of preambles on the RO, PRACH preambles used by different types of terminals to perform PRACH repetition transmission are determined, to determine corresponding RO groups.

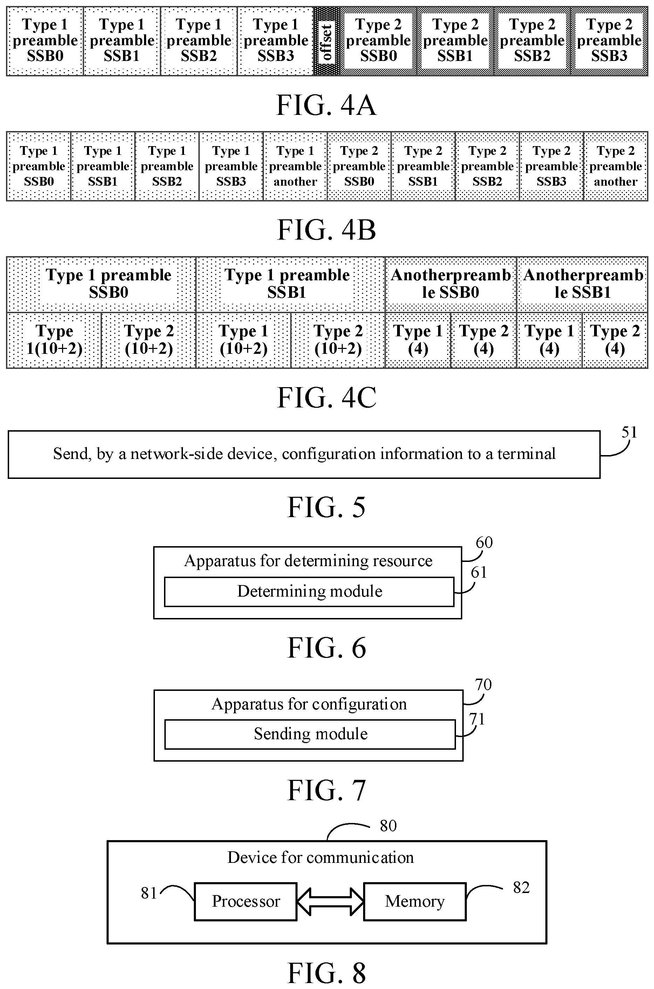

For example, a total of 64 preambles exist on each RO. As shown in FIG. 4A, a total of 28 type 1 preambles (that is, type 1 preambles) exist, and are mapped to 4 SSBs (that is, an SSB0, an SSB1, an SSB2, and an SSB3 in FIG. 4A). Specifically, 5 preambles are mapped to each SSB used for the CBRA, and 2 preambles are mapped to each SSB used for the CFRA. A total of 28 type 2 preambles (that is, type 2 preambles) exist, and mapped to 4 SSBs (that is, an SSB0, an SSB1, an SSB2, and an SSB3 in FIG. 4A). Specifically, 5 preambles are mapped to each SSB used for the CBRA, and 2 preambles are mapped to each SSB used for the CFRA. An interval between two types of preambles is 8 preambles, that is, an offset is 8 preambles.

For another example, a total of 64 preambles exist on each RO. As shown in FIG. 4B, a total of 32 type 1 preambles (that is, type 1 preambles) exist. A total of 28 preambles are used for the CBRA and the CFRA, and are mapped to 4 SSBs (that is, an SSB0, an SSB1, an SSB2, and an SSB3 in FIG. 4B). Specifically, 5 preambles are mapped to each SSB for the CBRA, and 2 preambles are mapped to each SSB for the CFRA. A total of 28 type 2 preambles (that is, type 2 preambles) exist. A total of 28 preambles are used for the CBRA and the CFRA, and are mapped to 4 SSBs (that is, an SSB0, an SSB1, an SSB2, and an SSB3 in FIG. 4B). Specifically, 5 preambles are mapped to each SSB for the CBRA, and 2 preambles are mapped to each SSB for the CFRA. Further, 4 preambles for another purpose (such as an SI request) are reserved for each of the two types of preambles.

Optionally, configuration may be performed for a preamble for each SSB. The above first configuration information related to a preamble on an RO may be used for at least one of the following:
configuring, for each SSB, a total number of preambles on the RO;
configuring, for each SSB, a number of preambles that are mapped to each SSB and used for CBRA among type 1 preambles on the RO;
configuring, for each SSB, a starting preamble identity of preambles that are mapped to each SSB and used for the CBRA among type 2 preambles on the RO;
configuring, for each SSB, a number of the preambles that are mapped to each SSB and used for the CBRA among the type 2 preambles on the RO;
configuring, for each SSB, an interval between a set of type 1 preambles mapped to each SSB and a set of type 2 preambles mapped to the same SSB, where for example, a preamble after N preambles reserved after a last preamble of type 1 preambles mapped to an SSB is a type 2 preambles mapped to the SSB; that is, a first type 2 preambles mapped to a same SSB and a last type 1 preambles mapped to the SSB have an offset (offset);
configuring, for each SSB, a total number of preambles on the RO that are used for the CBRA and CFRA, where for example, a total number of preambles on the RO for normal CBRA and normal CFRA may be configured for each SSB; thus, a number of preambles for another purpose (such as an SI request) is equal to the total number of the preambles minus the total number of the preambles for the CBRA and the CFRA;
configuring, for each SSB, a total number of preambles that are used for another purpose among the type 1 preambles on the RO, where the another purpose is PRACH transmission not used for the CBRA and the CFRA, for example, may be PRACH transmission sent for a terminal to request a network to send a broadcast message or activate some downlink broadcast information, such as an SI request;
configuring, for each SSB, a total number of preambles that are used for another purpose among the type 2 preambles on the RO, where the another purpose is PRACH transmission not used for the CBRA and the CFRA, for example, may be PRACH transmission sent for a terminal to request a network to send a broadcast message or activate some downlink broadcast information, such as an SI request;
configuring, for each SSB, a starting preamble identity of the preambles that are used for another purpose among the type 2 preambles on the RO, where the another purpose is PRACH transmission not used for the CBRA and the CFRA, for example, may be PRACH transmission sent for a terminal to request a network to send a broadcast message or activate some downlink broadcast information, such as an SI request;
configuring, for each SSB, a number of preambles that are mapped to each SSB and used for the CFRA among the type 1 preambles on the RO, where the another purpose is PRACH transmission not used for the CBRA and the CFRA, for example, may be PRACH transmission sent for a terminal to request a network to send a broadcast message or activate some downlink broadcast information, such as an SI request; and
configuring, for each SSB, a number of preambles that are mapped to each SSB and used for the CFRA among the type 2 preambles on the RO, where the another purpose is PRACH transmission not used for the CBRA and the CFRA, for example, may be PRACH transmission sent for a terminal to request a network to send a broadcast message or activate some downlink broadcast information, such as an SI request.

Thus, through configuration of different types of preambles on the RO, PRACH preambles used by different types of terminals to perform PRACH repetition transmission are determined, to determine corresponding RO groups.

For example, a total of 64 preambles exist on each RO. As shown in FIG. 4C, a total of 48 preambles are used for normal CBRA and normal CFRA, and mapped to 2 SSBs (that is, an SSB0 and an SSB1 in FIG. 4C). Specifically, 10 type 1 preambles and 10 type 2 preambles are mapped to each SSB for the CBRA, and 2 type 1 preambles and 2 type 2 preambles are mapped to each SSB for the CFRA. A total of 16 preambles are used for another purpose (such as an SI request), and mapped to 2 SSBs (that is, an SSB0 and an SSB1 in FIG. 4C). Specifically, 4 type 1 preambles and 4 type 2 preambles are mapped to each SSB.

In the embodiments of the present disclosure, in an enhanced duplex configuration, a plurality of types of ROs may occur, such as an RO in an uplink subband of a downlink slot and an RO in an uplink slot. In this case, the two types of ROs may be a same set of PRACH configuration resources, and are required to be jointly used for mapping from a downlink signal to an RO. Or, even if the two types of ROs are separately configured resources, mapping from all related downlink signals to the RO may be performed. In this case, to ensure that both the two types of ROs can be used for mapping of the downlink signal, different mapping sequences or methods may be required to be used in different particular periods. In this case, a downlink signal to RO mapping cycle may be changed, and an RO group determination period may be affected. Based on this, a first association pattern period and a second association pattern period of a downlink signal to an RO are introduced in the embodiment, to ensure that all downlink signals (such as SSBs) can be mapped to ROs on configured uplink resources.

Optionally, the first association pattern period of the downlink signal to the RO can satisfy at least one of the following:
(1) the first association pattern period includes a plurality of mapping cycles, and different association orders or different association methods of the downlink signal to the RO are used in at least two mapping cycles of the plurality of mapping cycles; that is, in the first mapping mode, different association orders or different association methods of the downlink signal to the RO are used for at least two mapping cycles; in this case, matching ROs can be selected according to an actual requirement to form an RO group;
(2) in one or more first association pattern periods, at least one RO group exists and is associated with each downlink signal having a particular index (such as an SSB index), and the RO group is only related to the non-enhanced-duplex uplink resource, or determination of the RO group is determination of a resource for PRACH repetition transmission by a terminal that does not support enhanced duplex; that is, the resource for the PRACH repetition transmission by the terminal that does not support enhanced duplex can be determined based on the first association pattern period;
(3) in one or more first association pattern periods, at least one RO group exists and is associated with each downlink signal having a particular index (such as an SSB index), and the RO group is related to the non-enhanced-duplex uplink resource and the enhanced-duplex uplink resource, or the determination of the RO group is determination of a resource for PRACH repetition transmission by a terminal that supports enhanced duplex; that is, the resource for the PRACH repetition transmission by the terminal that supports enhanced duplex can be determined based on the first association pattern period; and
(4) in one or more first association pattern periods, at least one RO group exists and is associated with each downlink signal having a particular index (such as an SSB index), and the RO group is only related to the enhanced-duplex uplink resource, or the determination of the RO group is the determination of the resource for the PRACH repetition transmission by the terminal that supports enhanced duplex; that is, the resource for the PRACH repetition transmission by the terminal that supports enhanced duplex can be determined based on the first association pattern period.

Optionally, the second association pattern period of the downlink signal to the RO can satisfy at least one of the following:
(a) different association orders or different association methods of the downlink signal to the RO are used for at least two second association pattern periods; that is, different association orders or different association methods of the downlink signal to the RO are used for different second association pattern periods; in this case, matching ROs can be selected according to an actual requirement to form an RO group;
(b) in one or more N times of second association pattern periods, at least one RO group exists and is associated with each downlink signal having a particular index (such as an SSB index), and the RO group is only related to the non-enhanced-duplex uplink resource, or determination of the RO group is determination of a resource for PRACH repetition transmission by a terminal that does not support enhanced duplex; N is an integer greater than 1; that is, the resource for the PRACH repetition transmission by the terminal that does not support enhanced duplex can be determined based on the second association pattern period;
(c) in one or more M times of second association pattern periods, at least one RO group exists and is associated with each downlink signal having a particular index (such as an SSB index), and the RO group is related to the non-enhanced-duplex uplink resource and the enhanced-duplex uplink resource, or the determination of the RO group is determination of a resource for PRACH repetition transmission by a terminal that supports enhanced duplex; M is an integer greater than 1; that is, the resource for the PRACH repetition transmission by the terminal that supports enhanced duplex can be determined based on the second association pattern period; and
(d) in one or more P times of second association pattern periods, at least one RO group exists and is associated with each downlink signal having a particular index (such as an SSB index), and the RO group is only related to the enhanced-duplex uplink resource, or the determination of the RO group is the determination of the resource for the PRACH repetition transmission by the terminal that supports enhanced duplex; P is an integer greater than 1; that is, the resource for the PRACH repetition transmission by the terminal that supports enhanced duplex can be determined based on the second association pattern period.

Optionally, the second association pattern period is any one of the following or a function of the at least one of the following (that is, is obtained based on at least one piece of the following operation):
a downlink signal to RO mapping cycle;
a downlink signal to RO association period; and
an enhanced duplex configuration period.

It should be noted that the downlink signal may be an SSB, or a channel state information-reference signal (CSI-RS), or another signal that is used for the downlink measurement and associated with PRACH transmission.

Optionally, to reduce complexity of implicitly determining a time window of an RO group, a determination window of the RO group may be directly configured through a network. The method for determining a resource in the embodiments of the present disclosure may further include:
the terminal receives third configuration information sent from the network-side device. The third configuration information is used for configuring a time window of the RO group. The time window includes one or more first association pattern periods, or the time window includes one or more second association pattern periods.

In some embodiments, in a situation that an RO group of a resource in a plurality of duplex configurations occurs, a network-side device can configure a time window used for determining the RO group. For example, a configuration may be performed through a system message, a dedicated radio resource control (Radio Resource Control, RRC) signaling, a physical layer signaling, etc.

With reference to FIG. 5, FIG. 5 is a flowchart of a method for configuration according to an embodiment of the present disclosure. The method is performed by a network-side device. As shown in FIG. 5, the method includes the following steps.

Step 51: The network-side device sends configuration information to a terminal.

In the embodiments of the present disclosure, the configuration information may include at least one of the following:
first configuration information related to a preamble on an RO;
second configuration information used for configuring a PRACH resource of a first RO, where the first RO is used for PRACH repetition transmission by a terminal that supports one or more types of enhanced duplex and PRACH repetition transmission by a terminal that does not support enhanced duplex, and the PRACH resource is used for the PRACH repetition transmission by the terminal that does not support enhanced duplex; that is, when an RO is used by both the terminal that supports one or more types of enhanced duplex and the terminal that does not support enhanced duplex to perform PRACH repetition transmission, some PRACH resources are reserved for the terminal that does not support enhanced duplex to perform PRACH repetition transmission;
third configuration information used for configuring a time window of an RO group, where the time window includes one or more first association pattern periods of a downlink signal to the RO, or the time window includes one or more second association pattern periods of the downlink signal to the RO; and
fourth configuration information used for configuring an RO resource on an enhanced-duplex uplink resource or a non-enhanced-duplex uplink resource.

Thus, through a configuration of the network-side device, a terminal can determine an RO group used for PRACH repetition transmission by combining information such as a duplex capability of the terminal (such as consideration of whether enhanced duplex is supported), measurement metric values of downlink signals associated with different types of RO groups, a preamble (preamble) selected by the terminal, an RO resource configured on an enhanced-duplex uplink resource or a non-enhanced-duplex uplink resource, and configuration information related to a preamble on an RO. Thus, a terminal that supports enhanced duplex, a terminal that does not support enhanced duplex, and a terminal that supports different types of enhanced duplex can be considered, to improve robustness of PRACH transmission.

Optionally, the above first configuration information related to a preamble on an RO may be used for at least one of the following:
configuring a total number of type 1 preambles on the RO;
configuring a number of preambles that are mapped to each synchronization signal block (SSB) and used for contention based random access (CBRA) among the type 1 preambles on the RO;
configuring a total number of type 2 preambles on the RO;
configuring a starting preamble identity (such as a starting preamble ID) of the type 2 preambles on the RO;
configuring a number of preambles that are mapped to each SSB and used for the CBRA among the type 2 preambles on the RO;
configuring an interval between a set of the type 1 preambles and a set of the type 2 preambles, where for example, a preamble after N preambles reserved after a last preamble of the type 1 preambles is a type 2 preambles, that is, a first type 2 preambles and the last type 1 preambles have an offset (offset);
configuring a total number of preambles that are used for the CBRA and contention free random access (CFRA) among the type 1 preambles on the RO, where for example, a total number of preambles that are used for normal CBRA and normal CFRA among the type 1 preambles on the RO may be configured; thus, a number of preambles that are used for another purpose such as a system information request (SI request) among the type 1 preambles is equal to the total number of the type 1 preambles minus the total number of the preambles that are used for the CBRA and the CFRA among the type 1 preambles; and
configuring a total number of preambles that are used for the CBRA and the CFRA among the type 2 preambles on the RO, where for example, a total number of preambles that are used for the normal CBRA and the normal CFRA among the type 2 preambles on the RO may be configured; thus, a number of preambles that are used for another purpose such as the SI request among the type 2 preambles is equal to the total number of the type 2 preambles minus the total number of the preambles that are used for the CBRA and the CFRA among the type 2 preambles.

Optionally, configuration may be performed for a preamble for each SSB. The above first configuration information related to a preamble on an RO may be used for at least one of the following:
configuring, for each SSB, a total number of preambles on the RO;
configuring, for each SSB, a number of preambles that are mapped to each SSB and used for CBRA among type 1 preambles on the RO;
configuring, for each SSB, a starting preamble identity of preambles that are mapped to each SSB and used for the CBRA among type 2 preambles on the RO;
configuring, for each SSB, a number of the preambles that are mapped to each SSB and used for the CBRA among the type 2 preambles on the RO;
configuring, for each SSB, an interval between a set of type 1 preambles mapped to each SSB and a set of type 2 preambles mapped to the same SSB, where for example, a preamble after N preambles reserved after a last preamble of type 1 preambles mapped to an SSB is a type 2 preambles mapped to the SSB; that is, a first type 2 preambles mapped to a same SSB and a last type 1 preambles mapped to the SSB have an offset (offset);
configuring, for each SSB, a total number of preambles on the RO that are used for the CBRA and CFRA, where for example, a total number of preambles on the RO for normal CBRA and normal CFRA may be configured for each SSB; thus, a number of preambles for another purpose (such as an SI request) is equal to the total number of the preambles minus the total number of the preambles for the CBRA and the CFRA;
configuring, for each SSB, a total number of preambles that are used for another purpose among the type 1 preambles on the RO, where the another purpose is PRACH transmission not used for the CBRA and the CFRA, for example, may be PRACH transmission sent for a terminal to request a network to send a broadcast message or activate some downlink broadcast information, such as an SI request;
configuring, for each SSB, a total number of preambles that are used for another purpose among the type 2 preambles on the RO, where the another purpose is PRACH transmission not used for the CBRA and the CFRA, for example, may be PRACH transmission sent for a terminal to request a network to send a broadcast message or activate some downlink broadcast information, such as an SI request;
configuring, for each SSB, a starting preamble identity of the preambles that are used for another purpose among the type 2 preambles on the RO, where the another purpose is PRACH transmission not used for the CBRA and the CFRA, for example, may be PRACH transmission sent for a terminal to request a network to send a broadcast message or activate some downlink broadcast information, such as an SI request;
configuring, for each SSB, a number of preambles that are mapped to each SSB and used for the CFRA among the type 1 preambles on the RO, where the another purpose is PRACH transmission not used for the CBRA and the CFRA, for example, may be PRACH transmission sent for a terminal to request a network to send a broadcast message or activate some downlink broadcast information, such as an SI request; and
configuring, for each SSB, a number of preambles that are mapped to each SSB and used for the CFRA among the type 2 preambles on the RO, where the another purpose is PRACH transmission not used for the CBRA and the CFRA, for example, may be PRACH transmission sent for a terminal to request a network to send a broadcast message or activate some downlink broadcast information, such as an SI request.

Optionally, the type 1 preambles are used for PRACH transmission by a terminal that does not support enhanced duplex. The type 2 preambles are used for PRACH transmission by a terminal that supports one or more types of enhanced duplex. Or, the type 1 preambles are used for PRACH transmission by a terminal type 1. The type 2 preambles are used for PRACH transmission by a terminal type 2. The terminal type 1 supports one or more types of enhanced duplex. The terminal type 2 supports one or more types of enhanced duplex different from the enhanced duplex supported by the terminal type 1.

Optionally, the first association pattern period of the downlink signal to the RO can satisfy at least one of the following:
the first association pattern period includes a plurality of mapping cycles, and different association orders or different association methods of the downlink signal to the RO are used in at least two mapping cycles of the plurality of mapping cycles; that is, in the first mapping mode, different association orders or different association methods of the downlink signal to the RO are used for at least two mapping cycles;
in one or more first association pattern periods, at least one RO group exists and is associated with each downlink signal having a particular index, and the RO group is only related to the non-enhanced-duplex uplink resource, or determination of the RO group is determination of a resource for PRACH repetition transmission by a terminal that does not support enhanced duplex;
in one or more first association pattern periods, at least one RO group exists and is associated with each downlink signal having a particular index, and the RO group is related to the non-enhanced-duplex uplink resource and the enhanced-duplex uplink resource, or the determination of the RO group is determination of a resource for PRACH repetition transmission by a terminal that supports enhanced duplex; and
in one or more first association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex.

Optionally, the second association pattern period of the downlink signal to the RO can satisfy at least one of the following:
different association orders or different association methods of the downlink signal to the RO are used for at least two second association pattern periods; that is, different association orders or different association methods of the downlink signal to the RO are used for different second association pattern periods;
in one or more N times of second association pattern periods, at least one RO group exists and is associated with each downlink signal having a particular index, and the RO group is only related to the non-enhanced-duplex uplink resource, or the determination of the RO group is the determination of the resource for the PRACH repetition transmission by the terminal that does not support enhanced duplex; and N is an integer greater than 1;
in one or more M times of second association pattern periods, at least one RO group exists and is associated with each downlink signal having a particular index, and the RO group is related to the non-enhanced-duplex uplink resource and the enhanced-duplex uplink resource, or the determination of the RO group is the determination of the resource for the PRACH repetition transmission by the terminal that supports enhanced duplex; and M is an integer greater than 1; and
in one or more P times of second association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex; and P is an integer greater than 1.

An execution body of the method for determining a resource provided in the embodiments of the present disclosure may be an apparatus for determining a resource. In the embodiments of the present disclosure, the apparatus for determining a resource provided in the embodiments of the present disclosure is described with an example in which the apparatus for determining a resource performs the method for determining a resource.

With reference to FIG. 6, a schematic structural diagram of an apparatus for determining a resource according to an embodiment of the present disclosure is shown in FIG. 6. The apparatus for determining a resource is applied to a terminal. As shown in FIG. 6, the apparatus 60 for determining a resource includes:
a determining module 61 configured to determine, according to first information, an RO group used for PRACH repetition transmission. The first information includes at least one of the following:
a duplex capability of a terminal;
measurement metric values of downlink signals associated with different types of RO groups;
a preamble (preamble) selected by the terminal;
an RO corresponding to first PRACH transmission by the terminal;
an RO resource configured on an enhanced-duplex uplink resource and a non-enhanced-duplex uplink resource, or an RO resource configured on a non-enhanced-duplex uplink resource, or an RO resource configured on an enhanced-duplex uplink resource;
first configuration information related to a preamble on an RO; and
a first association pattern period or a second association pattern period of a downlink signal to the RO.

Optionally, the first configuration information is used for at least one of the following:
configuring a total number of type 1 preambles on the RO;
configuring a number of preambles that are mapped to each SSB and used for CBRA among the type 1 preambles on the RO;
configuring a total number of type 2 preambles on the RO;
configuring a starting preamble identity of the type 2 preambles on the RO;
configuring a number of preambles that are mapped to each SSB and used for the CBRA among the type 2 preambles on the RO;
configuring an interval between a set of the type 1 preambles and a set of the type 2 preambles;
configuring a total number of preambles that are used for the CBRA and CFRA among the type 1 preambles on the RO; and
configuring a total number of preambles that are used for the CBRA and the CFRA among the type 2 preambles on the RO.

Optionally, the first configuration information is used for at least one of the following:
configuring, for each SSB, a total number of preambles on the RO;
configuring, for each SSB, a number of preambles that are mapped to each SSB and used for CBRA among type 1 preambles on the RO;
configuring, for each SSB, a starting preamble identity of preambles that are mapped to each SSB and used for the CBRA among type 2 preambles on the RO;
configuring, for each SSB, a number of the preambles that are mapped to each SSB and used for the CBRA among the type 2 preambles on the RO;
configuring, for each SSB, an interval between a set of type 1 preambles mapped to each SSB and a set of type 2 preambles mapped to the same SSB;
configuring, for each SSB, a total number of preambles on the RO that are used for the CBRA and CFRA;
configuring, for each SSB, a total number of preambles that are used for another purpose among the type 1 preambles on the RO;
configuring, for each SSB, a total number of preambles that are used for another purpose among the type 2 preambles on the RO;
configuring, for each SSB, a starting preamble identity of the preambles that are used for another purpose among the type 2 preambles on the RO;
configuring, for each SSB, a number of preambles that are mapped to each SSB and used for the CFRA among the type 1 preambles on the RO; and
configuring, for each SSB, a number of preambles that are mapped to each SSB and used for the CFRA among the type 2 preambles on the RO.

The another purpose is PRACH transmission not used for the CBRA and the CFRA.

Optionally, the type 1 preambles are used for PRACH transmission by a terminal that does not support enhanced duplex, and the type 2 preambles are used for PRACH transmission by a terminal that supports one or more types of enhanced duplex; or
the type 1 preambles are used for PRACH transmission by a terminal type 1, the type 2 preambles are used for PRACH transmission by a terminal type 2, the terminal type 1 supports one or more types of enhanced duplex, and the terminal type 2 supports one or more types of enhanced duplex different from the enhanced duplex supported by the terminal type 1.

Optionally, the apparatus 60 for determining a resource further includes:
a first receiving module configured to receive receives second configuration information sent from a network-side device. The second configuration information is used for configuring a PRACH resource of a first RO. The first RO is used for PRACH repetition transmission by the terminal that supports one or more types of enhanced duplex and the terminal that does not support enhanced duplex. The PRACH resource is used for the PRACH repetition transmission by the terminal that does not support enhanced duplex.

Optionally, the apparatus 60 for determining a resource further includes:
a performing module configured to perform, in cases that the terminal does not support enhanced duplex and the RO group is determined according to the RO resource configured on the enhanced-duplex uplink resource and the non-enhanced-duplex uplink resource, at least one of the following steps:
in a case that a second RO in the RO group is on the enhanced-duplex uplink resource, it is determined that the second RO is invalid or the second RO is not used for PRACH repetition transmission;
in a case that an X^{th} RO in the RO group is on the enhanced-duplex uplink resource, it is determined that the RO group is invalid or the RO group is not used for the PRACH repetition transmission, where X is an integer greater than 0;
in a case that at least Y ROs in the RO group are on the enhanced-duplex uplink resource, it is determined that the RO group is invalid or the RO group is not used for the PRACH repetition transmission, where Y is an integer greater than 0; and
in a case that the RO group includes an RO on the enhanced-duplex uplink resource and an RO on the non-enhanced-duplex uplink resource, the PRACH repetition transmission is performed by using different PRACH sequences.

Optionally, the first association pattern period satisfies at least one of the following:
the first association pattern period includes a plurality of mapping cycles, and different association orders or different association methods of the downlink signal to the RO are used in at least two mapping cycles of the plurality of mapping cycles;
in one or more first association pattern periods, at least one RO group exists and is associated with each downlink signal having a particular index, and the RO group is only related to the non-enhanced-duplex uplink resource, or determination of the RO group is determination of a resource for PRACH repetition transmission by a terminal that does not support enhanced duplex;
in one or more first association pattern periods, at least one RO group exists and is associated with each downlink signal having a particular index, and the RO group is related to the non-enhanced-duplex uplink resource and the enhanced-duplex uplink resource, or the determination of the RO group is determination of a resource for PRACH repetition transmission by a terminal that supports enhanced duplex; and
in one or more first association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex.

Optionally, the second association pattern period satisfies at least one of the following:
different association orders or different association methods of the downlink signal to the RO are used for at least two second association pattern periods;
in one or more N times of second association pattern periods, at least one RO group exists and is associated with each downlink signal having a particular index, and the RO group is only related to the non-enhanced-duplex uplink resource, or the determination of the RO group is the determination of the resource for the PRACH repetition transmission by the terminal that does not support enhanced duplex; and N is an integer greater than 1;
in one or more M times of second association pattern periods, at least one RO group exists and is associated with each downlink signal having a particular index, and the RO group is related to the non-enhanced-duplex uplink resource and the enhanced-duplex uplink resource, or the determination of the RO group is the determination of the resource for the PRACH repetition transmission by the terminal that supports enhanced duplex; and M is an integer greater than 1; and
in one or more P times of second association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex; and P is an integer greater than 1.

Optionally, the second association pattern period is any one of the following or a function of the at least one of the following:
a downlink signal to RO mapping cycle;
a downlink signal to RO association period; and
an enhanced duplex configuration period.

Optionally, the apparatus 60 for determining a resource further includes:
a second receiving module configured to receive third configuration information sent from the network-side device. The third configuration information is used for configuring a time window of the RO group. The time window includes one or more first association pattern periods, or the time window includes one or more second association pattern periods.

The apparatus 60 for determining a resource in the embodiments of the present disclosure may be an electronic device, such as an electronic device having an operating system, or a component in the electronic device, such as an integrated circuit or a chip. The electronic device may be a terminal or another device other than the terminal. Illustratively, the terminal may include but is not limited to the types of the terminal 11 listed above. Another device may be a server, a network attached storage (Network Attached Storage, NAS), etc. This is not specifically limited in the embodiments of the present disclosure.

The apparatus 60 for determining a resource provided in the embodiments of the present disclosure can implement the processes implemented in the method embodiment shown in FIG. 3 and achieve the same technical effect. To avoid repetition, details are not described herein.

With reference to FIG. 7, a schematic structural diagram of an apparatus for configuration according to an embodiment of the present disclosure is shown FIG. 7. The apparatus is applied to a network-side device. As shown in FIG. 7, the apparatus 70 for configuration includes:
a sending module 71 configured to send configuration information to a terminal.

The configuration information includes at least one of the following:
first configuration information related to a preamble on an RO;
second configuration information used for configuring a PRACH resource of a first RO, where the first RO is used for PRACH repetition transmission by a terminal that supports one or more types of enhanced duplex and PRACH repetition transmission by a terminal that does not support enhanced duplex, and the PRACH resource is used for the PRACH repetition transmission by the terminal that does not support enhanced duplex;
third configuration information used for configuring a time window of an RO group, where the time window includes one or more first association pattern periods of a downlink signal to the RO, or the time window includes one or more second association pattern periods of the downlink signal to the RO; and
fourth configuration information used for configuring an RO resource on an enhanced-duplex uplink resource or a non-enhanced-duplex uplink resource.

Optionally, the first configuration information is used for at least one of the following:
configuring a total number of type 1 preambles on the RO;
configuring a number of preambles that are mapped to each SSB and used for CBRA among the type 1 preambles on the RO;
configuring a total number of type 2 preambles on the RO;
configuring a starting preamble identity of the type 2 preambles on the RO;
configuring a number of preambles that are mapped to each SSB and used for the CBRA among the type 2 preambles on the RO;
configuring an interval between a set of the type 1 preambles and a set of the type 2 preambles;
configuring a total number of preambles that are used for the CBRA and CFRA among the type 1 preambles on the RO; and
configuring a total number of preambles that are used for the CBRA and the CFRA among the type 2 preambles on the RO.

Optionally, the first configuration information is used for at least one of the following:
configuring, for each SSB, a total number of preambles on the RO;
configuring, for each SSB, a number of preambles that are mapped to each SSB and used for CBRA among type 1 preambles on the RO;
configuring, for each SSB, a starting preamble identity of preambles that are mapped to each SSB and used for the CBRA among type 2 preambles on the RO;
configuring, for each SSB, a number of the preambles that are mapped to each SSB and used for the CBRA among the type 2 preambles on the RO;
configuring, for each SSB, an interval between a set of type 1 preambles mapped to each SSB and a set of type 2 preambles mapped to the same SSB;
configuring, for each SSB, a total number of preambles on the RO that are used for the CBRA and CFRA;
configuring, for each SSB, a total number of preambles that are used for another purpose among the type 1 preambles on the RO;
configuring, for each SSB, a total number of preambles that are used for another purpose among the type 2 preambles on the RO;
configuring, for each SSB, a starting preamble identity of the preambles that are used for another purpose among the type 2 preambles on the RO;
configuring, for each SSB, a number of preambles that are mapped to each SSB and used for the CFRA among the type 1 preambles on the RO; and
configuring, for each SSB, a number of preambles that are mapped to each SSB and used for the CFRA among the type 2 preambles on the RO.

The another purpose is PRACH transmission not used for the CBRA and the CFRA.

Optionally, the type 1 preambles are used for PRACH transmission by a terminal that does not support enhanced duplex, and the type 2 preambles are used for PRACH transmission by a terminal that supports one or more types of enhanced duplex; or
the type 1 preambles are used for PRACH transmission by a terminal type 1, the type 2 preambles are used for PRACH transmission by a terminal type 2, the terminal type 1 supports one or more types of enhanced duplex, and the terminal type 2 supports one or more types of enhanced duplex different from the enhanced duplex supported by the terminal type 1.

Optionally, the first association pattern period satisfies at least one of the following:
the first association pattern period includes a plurality of mapping cycles, and different association orders or different association methods of the downlink signal to the RO are used in at least two mapping cycles of the plurality of mapping cycles;
in one or more first association pattern periods, at least one RO group exists and is associated with each downlink signal having a particular index, and the RO group is only related to the non-enhanced-duplex uplink resource, or determination of the RO group is determination of a resource for PRACH repetition transmission by a terminal that does not support enhanced duplex;
in one or more first association pattern periods, at least one RO group exists and is associated with each downlink signal having a particular index, and the RO group is related to the non-enhanced-duplex uplink resource and the enhanced-duplex uplink resource, or the determination of the RO group is determination of a resource for PRACH repetition transmission by a terminal that supports enhanced duplex; and
in one or more first association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex.

Optionally, the second association pattern period satisfies at least one of the following:
different association orders or different association methods of the downlink signal to the RO are used for at least two second association pattern periods;
in one or more N times of second association pattern periods, at least one RO group exists and is associated with each downlink signal having a particular index, and the RO group is only related to the non-enhanced-duplex uplink resource, or the determination of the RO group is the determination of the resource for the PRACH repetition transmission by the terminal that does not support enhanced duplex; and N is an integer greater than 1;
in one or more M times of second association pattern periods, at least one RO group exists and is associated with each downlink signal having a particular index, and the RO group is related to the non-enhanced-duplex uplink resource and the enhanced-duplex uplink resource, or the determination of the RO group is the determination of the resource for the PRACH repetition transmission by the terminal that supports enhanced duplex; and M is an integer greater than 1; and
in one or more P times of second association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex; and P is an integer greater than 1.

The apparatus 70 for configuration provided in the embodiments of the present disclosure can implement processes implemented in the method embodiment in FIG. 5, and achieve the same technical effect. To avoid repetition, details are not described herein.

As shown in FIG. 8, the embodiments of the present disclosure further provide a device 80 for communication. The device for communication includes a processor 81 and a memory 82. The memory 82 stores a program or instructions capable of being run on the processor 81. For example, in a case that the device 80 for communication is a terminal, the program or the instructions, when executed by the processor 81, implement the steps in the above embodiments of the method for determining a resource, and can achieve the same technical effects. In a case that the device 80 for communication is a network-side device, the program or the instructions, when executed by the processor 81, implement the steps in the above embodiments of the method for configuration, and can achieve the same technical effects. To avoid repetition, details are not described herein.

The embodiments of the present disclosure further provide a terminal. The terminal includes a processor and a communication interface. The communication interface is coupled to the processor. The processor is configured to run a program or instructions, to implement the steps in the method embodiment shown in FIG. 3. The terminal embodiment corresponds to the above terminal-side method embodiment. Implementation processes and implementations of the above method embodiment all can be suitable for the terminal embodiment, and can achieve the same technical effects.

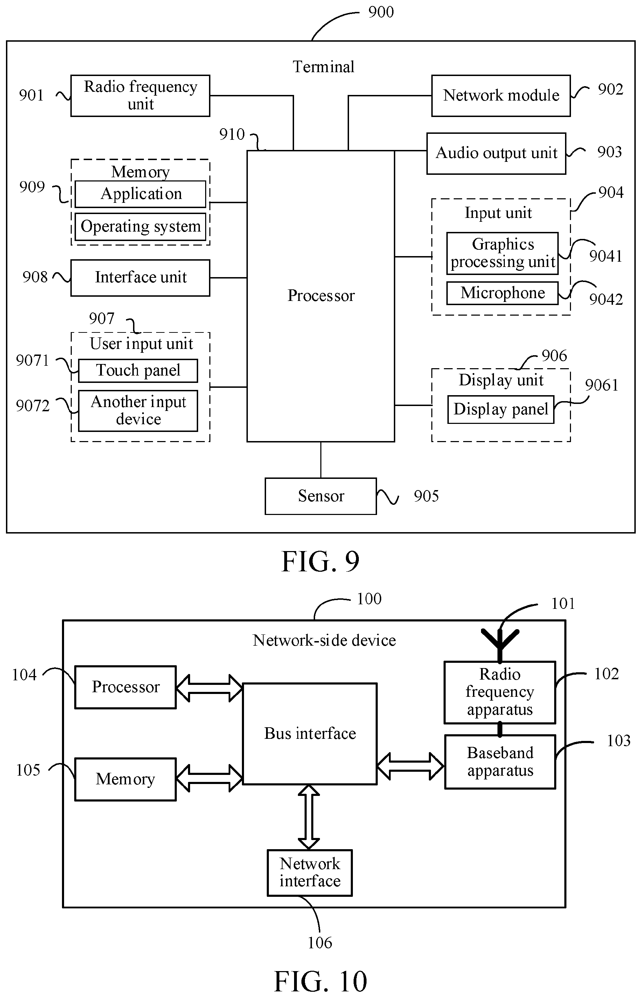

Specifically, FIG. 9 is a schematic structural diagram of a hardware structure of a terminal according to an embodiment of the present disclosure.

The terminal 900 includes but is not limited to at least some components of a radio frequency unit 901, a network module 902, an audio output unit 903, an input unit 904, a sensor 905, a display unit 906, a user input unit 907, an interface unit 908, a memory 909, a processor 910, etc.

Those skilled in the art can understand that the terminal 900 may further include a power supply (such as a battery) for supplying power to the components. The power supply may be logically connected to the processor 910 by a power management system. Thus, functions such as charging, discharging, and power consumption management can be implemented by the power management system. The terminal structure shown in FIG. 9 constitutes no limitation on the terminal. The terminal may include more or fewer components than those shown in the figure, or some component combinations, or different component arrangements. Repeated content is omitted herein.

It should be understood that in the embodiments of the present disclosure, an input unit 904 may include a graphics processing unit (Graphics Processing Unit, GPU) 9041 and a microphone 9042. The graphics processing unit 9041 processes image data of a static picture or video that is acquired by an image capture apparatus (such as a camera) in a video capture mode or an image capture mode. The display unit 906 may include a display panel 9061. The display panel 9061 may be configured by using a liquid crystal display, an organic light-emitting diode, etc. The user input unit 907 includes a touch panel 9071 and at least one type of other input devices 9072. The touch panel 9071 is alternatively referred to as a touch screen. The touch panel 9071 may include a touch detection apparatus and a touch controller. The other input devices 9072 may include but are not limited to a physical keyboard, a functional key (such as a volume control key or a switch key), a track ball, a mouse, and a joystick. Repeated content is omitted herein.

In the embodiments of the present disclosure, after receiving downlink data from a network-side device, the radio frequency unit 901 may transmit the downlink data to the processor 910 to perform processing. In addition, the radio frequency unit 901 may send uplink data to the network-side device. Generally, the radio frequency unit 901 includes but is not limited to an antenna, an amplifier, a transceiver, a coupler, a low noise amplifier, a duplexer, etc.

The memory 909 may be configured to store a software program or instructions and various types of data. The memory 909 may mainly include a first storage region for storing a program or instructions and a second storage region for storing data. The first storage region may store an operating system, an application or instructions required for at least one function (such as a sound playback function and an image playback function), etc. In addition, the memory 909 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM) or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 909 in the embodiments of the present disclosure includes but is not limited to these and any other suitable types of memories.

The processor 910 may include one or more processing units. Optionally, the processor 910 integrates an application processor and a modem processor. The application processor mainly processes operations related to an operating system, a user interface, an application, etc. The modem processor mainly processes wireless communication signals, and is a baseband processor for example. It can be understood that the above modem processor may not be integrated into the processor 910.

The processor 910 is configured to determine, according to first information, an RO group used for PRACH repetition transmission. The first information includes at least one of the following: a duplex capability of the terminal; measurement metric values of downlink signals associated with different types of RO groups; a preamble (preamble) selected by the terminal; an RO corresponding to first PRACH transmission by the terminal; an RO resource configured on an enhanced-duplex uplink resource and a non-enhanced-duplex uplink resource, or an RO resource configured on a non-enhanced-duplex uplink resource, or an RO resource configured on an enhanced-duplex uplink resource; first configuration information related to a preamble on an RO; and a first association pattern period or a second association pattern period of a downlink signal to the RO.

It can be understood that for the implementation processes of all implementations mentioned in embodiments, reference can be made to the related descriptions in the above method embodiments, and the same or corresponding technical effects can be achieved. To avoid repetition, details are not described herein.

The embodiments of the present disclosure further provide a network-side device. The network-side device includes a processor and a communication interface. The communication interface is coupled to the processor. The processor is configured to run a program or instructions, to implement steps of the method embodiment shown in FIG. 5. The network-side device embodiment corresponds to the above network-side device method embodiment. Each implementation process and implementation of the above method embodiment can be suitable for the network-side device embodiment, and can achieve the same technical effects.

Specifically, the embodiments of the present disclosure further provide a network-side device. As shown in FIG. 10, the network-side device 100 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101, and sends the received information to the baseband apparatus 103 to perform processing. In a downlink direction, the baseband apparatus 103 processes to-be-sent information and sends the information to the radio frequency apparatus 102. The radio frequency apparatus 102 processes the received information and then sends the information through the antenna 101.

The method performed by the network-side device in the above embodiments may be implemented in the baseband apparatus 103. The baseband apparatus 103 includes a baseband processor.

The baseband apparatus 103 may include, for example, at least one baseband board. A plurality of chips are arranged on the baseband board. As shown in FIG. 10, one of the chips is, for example, a baseband processor, and is connected to the memory 105 through a bus interface, to invoke a program in the memory 105 to perform network device operations shown in the above method embodiments.

The network-side device may further include a network interface 106. The interface, for example, is a common public radio interface (Common Public Radio Interface, CPRI).

Specifically, the network-side device 100 in the embodiments of the present disclosure further includes instructions or a program that is stored on the memory 105 and is capable of being run on the processor 104. The processor 104 invokes the instructions or the program from the memory 105 to perform the methods performed by the modules shown in FIG. 7, and achieves the same technical effects. To avoid repetition, details are not described herein.

The embodiments of the present disclosure further provide a readable storage medium. The readable storage medium stores a program or instructions. The program or the instructions, when executed by a processor, implement the processes of the above embodiments of the method for determining a resource or implement the processes of the above embodiments of the method for configuration, and can achieve the same technical effects. To avoid repetition, details are not described herein.

The processor is a processor in the terminal described in the above embodiments. The readable storage medium includes a computer-readable storage medium, such as a computer read-only memory (ROM), a random access memory (RAM), a magnetic disk, or an optical disk. In some examples, the readable storage medium may be a non-transitory readable storage medium.

The embodiments of the present disclosure further provide a chip. The chip includes a processor and a communication interface. The communication interface is coupled to the processor. The processor is configured to run a program or instructions, to implement the processes of the above embodiments of the method for determining a resource or implement the processes of the above embodiments of the method for configuration, and can achieve the same technical effects. To avoid repetition, details are not described herein.

It should be understood that the chip mentioned in the embodiments of the present disclosure may alternatively be referred to as a system on chip.

The embodiments of the present disclosure further provide a computer program/program product. The computer program/program product is stored in a storage medium. The computer program/program product is executed by at least one processor to implement the processes of the above embodiments of the method for determining a resource or implement the processes of the above embodiments of the method for configuration, and can achieve the same technical effects. To avoid repetition, details are not described herein.

The embodiments of the present disclosure further provide a communication system. The communication system includes a terminal and a network-side device. The terminal may be configured to perform the steps of the method for determining a resource in FIG. 3. The network-side device may be configured to perform the steps of the method for configuration in FIG. 5.

It should be noted that the terms "comprise", "include", or any other variations thereof herein is intended to cover a non-exclusive inclusion, such that a process, method, article, or apparatus including a series of elements not only includes those elements, but also includes other elements that are not explicitly listed, or further includes inherent elements of such a process, method, article, or apparatus. In a case of no more limitations, an element limited by phrases "comprising a..." and "including a..." does not exclude other same elements in a process, method, article, or apparatus including the element. In addition, it should be noted that the scopes of the methods and apparatuses in the implementations of the present disclosure are not limited to performing functions in the order shown or discussed, and may further include performing functions in a substantially simultaneous manner or in a reverse order according to the functions involved. For example, the described methods may be performed in an order different from the described order, and various steps may be further added, omitted, or combined. In addition, features described with reference to some examples may be combined in other examples.

Through the descriptions of the above implementations, those skilled in the art can clearly understand that the above method embodiments may be implemented through a computer software product and a necessary universal hardware platform, or may certainly be implemented through hardware. The computer software product is stored in a storage medium (such as an ROM, an RAM, a magnetic disk, and an optical disc), and includes several instructions, to cause a terminal or a network-side device to perform the methods described in the embodiments of the present disclosure.

The embodiments of the present disclosure are described above in combination with the accompanying drawings, but the present disclosure is not limited to the above particular implementations. The above particular implementations are merely illustrative rather than limitative. Those of ordinary skill in the art can further make implementations in various forms under the inspiration of the present disclosure without departing from the spirit of the present disclosure and the scope of protection of the claims. Theses implementations all fall within the scope of protection of the present disclosure.

## Claims

1. A method for determining a resource, comprising:
determining, by a terminal according to first information, a PRACH occasion (RO) group used for physical random access channel (PRACH) repetition transmission, wherein
the first information comprises at least one of the following:
a duplex capability of the terminal;
measurement metric values of downlink signals associated with different types of RO groups;
a preamble (preamble) selected by the terminal;
an RO corresponding to first PRACH transmission by the terminal;
an RO resource configured on an enhanced-duplex uplink resource and a non-enhanced-duplex uplink resource, or an RO resource configured on a non-enhanced-duplex uplink resource, or an RO resource configured on an enhanced-duplex uplink resource;
first configuration information related to a preamble on an RO; and
a first association pattern period or a second association pattern period of a downlink signal to the RO.

2. The method according to claim 1, wherein the first configuration information is used for at least one of the following:
configuring a total number of type 1 preambles on the RO;
configuring a number of preambles that are mapped to each synchronization signal block (SSB) and used for contention based random access (CBRA) among the type 1 preambles on the RO;
configuring a total number of type 2 preambles on the RO;
configuring a starting preamble identity of the type 2 preambles on the RO;
configuring a number of preambles that are mapped to each SSB and used for the CBRA among the type 2 preambles on the RO;
configuring an interval between a set of the type 1 preambles and a set of the type 2 preambles;
configuring a total number of preambles that are used for the CBRA and contention free random access (CFRA) among the type 1 preambles on the RO; and
configuring a total number of preambles that are used for the CBRA and the CFRA among the type 2 preambles on the RO.

3. The method according to claim 1, wherein the first configuration information is used for at least one of the following:
configuring, for each SSB, a total number of preambles on the RO;
configuring, for each SSB, a number of preambles that are mapped to each SSB and used for CBRA among type 1 preambles on the RO;
configuring, for each SSB, a starting preamble identity of preambles that are mapped to each SSB and used for the CBRA among type 2 preambles on the RO;
configuring, for each SSB, a number of the preambles that are mapped to each SSB and used for the CBRA among the type 2 preambles on the RO;
configuring, for each SSB, an interval between a set of type 1 preambles mapped to each SSB and a set of type 2 preambles mapped to the same SSB;
configuring, for each SSB, a total number of preambles on the RO that are used for the CBRA and CFRA;
configuring, for each SSB, a total number of preambles that are used for another purpose among the type 1 preambles on the RO;
configuring, for each SSB, a total number of preambles that are used for another purpose among the type 2 preambles on the RO;
configuring, for each SSB, a starting preamble identity of the preambles that are used for another purpose among the type 2 preambles on the RO;
configuring, for each SSB, a number of preambles that are mapped to each SSB and used for the CFRA among the type 1 preambles on the RO; and
configuring, for each SSB, a number of preambles that are mapped to each SSB and used for the CFRA among the type 2 preambles on the RO; and
the another purpose is PRACH transmission not used for the CBRA and the CFRA.

4. The method according to claim 2 or 3, wherein the type 1 preambles are used for PRACH transmission by a terminal that does not support enhanced duplex, and the type 2 preambles are used for PRACH transmission by a terminal that supports one or more types of enhanced duplex;
or
the type 1 preambles are used for PRACH transmission by a terminal type 1, the type 2 preambles are used for PRACH transmission by a terminal type 2, the terminal type 1 supports one or more types of enhanced duplex, and the terminal type 2 supports one or more types of enhanced duplex different from the enhanced duplex supported by the terminal type 1.

5. The method according to any one of claims 1 to 4, further comprising:
receiving, by the terminal, second configuration information sent from a network-side device, wherein
the second configuration information is used for configuring a PRACH resource of a first RO, the first RO is used for PRACH repetition transmission by the terminal that supports one or more types of enhanced duplex and the terminal that does not support enhanced duplex, and the PRACH resource is used for the PRACH repetition transmission by the terminal that does not support enhanced duplex.

6. The method according to any one of claims 1 to 5, wherein in cases that the terminal does not support enhanced duplex and the RO group is determined according to the RO resource configured on the enhanced-duplex uplink resource and the non-enhanced-duplex uplink resource, the method further comprises at least one of the following:
determining, by the terminal in a case that a second RO in the RO group is on the enhanced-duplex uplink resource, that the second RO is invalid or the second RO is not used for PRACH repetition transmission;
determining, by the terminal in a case that an X^{th} RO in the RO group is on the enhanced-duplex uplink resource, that the RO group is invalid or the RO group is not used for the PRACH repetition transmission, wherein X is an integer greater than 0;
determining, by the terminal in a case that at least Y ROs in the RO group are on the enhanced-duplex uplink resource, that the RO group is invalid or the RO group is not used for the PRACH repetition transmission, wherein Y is an integer greater than 0; and
performing, by the terminal in a case that the RO group comprises an RO on the enhanced-duplex uplink resource and an RO on the non-enhanced-duplex uplink resource, the PRACH repetition transmission by using different PRACH sequences.

7. The method according to any one of claims 1 to 6, wherein the first association pattern period satisfies at least one of the following:
the first association pattern period comprises a plurality of mapping cycles, and different association orders or different association methods of the downlink signal to the RO are used in at least two mapping cycles of the plurality of mapping cycles;
in one or more first association pattern periods, at least one RO group exists and is associated with each downlink signal having a particular index, and the RO group is only related to the non-enhanced-duplex uplink resource, or determination of the RO group is determination of a resource for the PRACH repetition transmission by the terminal that does not support enhanced duplex;
in one or more first association pattern periods, at least one RO group exists and is associated with each downlink signal having a particular index, and the RO group is related to the non-enhanced-duplex uplink resource and the enhanced-duplex uplink resource, or the determination of the RO group is determination of a resource for the PRACH repetition transmission by the terminal that supports enhanced duplex; and
in one or more first association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex.

8. The method according to any one of claims 1 to 7, wherein the second association pattern period satisfies at least one of the following:
different association orders or different association methods of the downlink signal to the RO are used in at least two second association pattern periods;
in one or more N times of second association pattern periods, at least one RO group exists and is associated with each downlink signal having a particular index, and the RO group is only related to the non-enhanced-duplex uplink resource, or the determination of the RO group is the determination of the resource for the PRACH repetition transmission by the terminal that does not support enhanced duplex; and N is an integer greater than 1;
in one or more M times of second association pattern periods, at least one RO group exists and is associated with each downlink signal having a particular index, and the RO group is related to the non-enhanced-duplex uplink resource and the enhanced-duplex uplink resource, or the determination of the RO group is the determination of the resource for the PRACH repetition transmission by the terminal that supports enhanced duplex; and M is an integer greater than 1; and
in one or more P times of second association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex; and P is an integer greater than 1.

9. The method according to claim 1 or 8, wherein the second association pattern period is any one of the following or a function of the at least one of the following:
a downlink signal to RO mapping cycle;
a downlink signal to RO association period; and
an enhanced duplex configuration period.

10. The method according to any one of claims 1 to 9, further comprising:
receiving, by the terminal, third configuration information sent from a network-side device, wherein
the third configuration information is used for configuring a time window of the RO group, the time window comprises one or more first association pattern periods, or the time window comprises one or more second association pattern periods.

11. A method for configuration, comprising:
sending, by a network-side device, configuration information to a terminal, wherein
the configuration information comprises at least one of the following:
first configuration information related to a preamble on an RO;
second configuration information used for configuring a PRACH resource of a first RO, wherein the first RO is used for PRACH repetition transmission by a terminal that supports one or more types of enhanced duplex and PRACH repetition transmission by a terminal that does not support enhanced duplex, and the PRACH resource is used for the PRACH repetition transmission by the terminal that does not support enhanced duplex;
third configuration information used for configuring a time window of an RO group, wherein the time window comprises one or more first association pattern periods of a downlink signal to the RO, or the time window comprises one or more second association pattern periods of the downlink signal to the RO; and
fourth configuration information used for configuring an RO resource on an enhanced-duplex uplink resource or a non-enhanced-duplex uplink resource.

12. The method according to claim 11, wherein the first configuration information is used for at least one of the following:
configuring a total number of type 1 preambles on the RO;
configuring a number of preambles that are mapped to each SSB and used for CBRA among the type 1 preambles on the RO;
configuring a total number of type 2 preambles on the RO;
configuring a starting preamble identity of the type 2 preambles on the RO;
configuring a number of preambles that are mapped to each SSB and used for the CBRA among the type 2 preambles on the RO;
configuring an interval between a set of the type 1 preambles and a set of the type 2 preambles;
configuring a total number of preambles that are used for the CBRA and CFRA among the type 1 preambles on the RO; and
configuring a total number of preambles that are used for the CBRA and the CFRA among the type 2 preambles on the RO.

13. The method according to claim 11, wherein the first configuration information is used for at least one of the following:
configuring, for each SSB, a total number of preambles on the RO;
configuring, for each SSB, a number of preambles that are mapped to each SSB and used for CBRA among type 1 preambles on the RO;
configuring, for each SSB, a starting preamble identity of preambles that are mapped to each SSB and used for the CBRA among type 2 preambles on the RO;
configuring, for each SSB, a number of the preambles that are mapped to each SSB and used for the CBRA among the type 2 preambles on the RO;
configuring, for each SSB, an interval between a set of type 1 preambles mapped to each SSB and a set of type 2 preambles mapped to the same SSB;
configuring, for each SSB, a total number of preambles on the RO that are used for the CBRA and CFRA;
configuring, for each SSB, a total number of preambles that are used for another purpose among the type 1 preambles on the RO;
configuring, for each SSB, a total number of preambles that are used for another purpose among the type 2 preambles on the RO;
configuring, for each SSB, a starting preamble identity of the preambles that are used for another purpose among the type 2 preambles on the RO;
configuring, for each SSB, a number of preambles that are mapped to each SSB and used for the CFRA among the type 1 preambles on the RO; and
configuring, for each SSB, a number of preambles that are mapped to each SSB and used for the CFRA among the type 2 preambles on the RO; and
the another purpose is PRACH transmission not used for the CBRA and the CFRA.

14. The method according to claim 12 or 13, wherein the type 1 preambles are used for the PRACH transmission by the terminal that does not support enhanced duplex, and the type 2 preambles are used for PRACH transmission by the terminal that supports one or more types of enhanced duplex;
or
the type 1 preambles are used for PRACH transmission by a terminal type 1, the type 2 preambles are used for PRACH transmission by a terminal type 2, the terminal type 1 supports one or more types of enhanced duplex, and the terminal type 2 supports one or more types of enhanced duplex different from the enhanced duplex supported by the terminal type 1.

15. The method according to any one of claims 11 to 14, wherein each first association pattern period satisfies at least one of the following:
the first association pattern period comprises a plurality of mapping cycles, and different association orders or different association methods of the downlink signal to the RO are used in at least two mapping cycles of the plurality of mapping cycles;
in one or more first association pattern periods, at least one RO group exists and is associated with each downlink signal having a particular index, and the RO group is only related to the non-enhanced-duplex uplink resource, or determination of the RO group is determination of a resource for the PRACH repetition transmission by the terminal that does not support enhanced duplex;
in one or more first association pattern periods, at least one RO group exists and is associated with each downlink signal having a particular index, and the RO group is related to the non-enhanced-duplex uplink resource and the enhanced-duplex uplink resource, or the determination of the RO group is determination of a resource for PRACH repetition transmission by a terminal that supports enhanced duplex; and
in one or more first association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex.

16. The method according to any one of claims 11 to 15, wherein each second association pattern period satisfies at least one of the following:
different association orders or different association methods of the downlink signal to the RO are used for at least two second association pattern periods;
in one or more N times of second association pattern periods, at least one RO group exists and is associated with each downlink signal having a particular index, and the RO group is only related to the non-enhanced-duplex uplink resource, or the determination of the RO group is the determination of the resource for the PRACH repetition transmission by the terminal that does not support enhanced duplex; and N is an integer greater than 1;
in one or more M times of second association pattern periods, at least one RO group exists and is associated with each downlink signal having a particular index, and the RO group is related to the non-enhanced-duplex uplink resource and the enhanced-duplex uplink resource, or the determination of the RO group is the determination of the resource for the PRACH repetition transmission by the terminal that supports enhanced duplex; and M is an integer greater than 1; and
in one or more P times of second association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex; and P is an integer greater than 1.

17. An apparatus for determining a resource, comprising:
a determining module configured to determine, according to first information, an RO group used for PRACH repetition transmission, wherein the first information comprises at least one of the following:
a duplex capability of a terminal;
measurement metric values of downlink signals associated with different types of RO groups;
a preamble (preamble) selected by the terminal;
an RO corresponding to first PRACH transmission by the terminal;
an RO resource configured on an enhanced-duplex uplink resource and a non-enhanced-duplex uplink resource, or an RO resource configured on a non-enhanced-duplex uplink resource, or an RO resource configured on an enhanced-duplex uplink resource;
first configuration information related to a preamble on an RO; and
a first association pattern period or a second association pattern period of a downlink signal to the RO.

18. The apparatus according to claim 17, wherein the first configuration information is used for at least one of the following:
configuring a total number of type 1 preambles on the RO;
configuring a number of preambles that are mapped to each SSB and used for CBRA among the type 1 preambles on the RO;
configuring a total number of type 2 preambles on the RO;
configuring a starting preamble identity of the type 2 preambles on the RO;
configuring a number of preambles that are mapped to each SSB and used for the CBRA among the type 2 preambles on the RO;
configuring an interval between a set of the type 1 preambles and a set of the type 2 preambles;
configuring a total number of preambles that are used for the CBRA and CFRA among the type 1 preambles on the RO; and
configuring a total number of preambles that are used for the CBRA and the CFRA among the type 2 preambles on the RO.

19. The apparatus according to claim 17, wherein the first configuration information is used for at least one of the following:
configuring, for each SSB, a total number of preambles on the RO;
configuring, for each SSB, a number of preambles that are mapped to each SSB and used for CBRA among type 1 preambles on the RO;
configuring, for each SSB, a starting preamble identity of preambles that are mapped to each SSB and used for the CBRA among type 2 preambles on the RO;
configuring, for each SSB, a number of the preambles that are mapped to each SSB and used for the CBRA among the type 2 preambles on the RO;
configuring, for each SSB, an interval between a set of type 1 preambles mapped to each SSB and a set of type 2 preambles mapped to the same SSB;
configuring, for each SSB, a total number of preambles on the RO that are used for the CBRA and CFRA;
configuring, for each SSB, a total number of preambles that are used for another purpose among the type 1 preambles on the RO;
configuring, for each SSB, a total number of preambles that are used for another purpose among the type 2 preambles on the RO;
configuring, for each SSB, a starting preamble identity of the preambles that are used for another purpose among the type 2 preambles on the RO;
configuring, for each SSB, a number of preambles that are mapped to each SSB and used for the CFRA among the type 1 preambles on the RO; and
configuring, for each SSB, a number of preambles that are mapped to each SSB and used for the CFRA among the type 2 preambles on the RO; and
the another purpose is PRACH transmission not used for the CBRA and the CFRA.

20. The apparatus according to any one of claims 17 to 19, wherein the first association pattern period satisfies at least one of the following:
the first association pattern period comprises a plurality of mapping cycles, and different association orders or different association methods of the downlink signal to the RO are used in at least two mapping cycles of the plurality of mapping cycles;
in one or more first association pattern periods, at least one RO group exists and is associated with each downlink signal having a particular index, and the RO group is only related to the non-enhanced-duplex uplink resource, or determination of the RO group is determination of a resource for PRACH repetition transmission by a terminal that does not support enhanced duplex;
in one or more first association pattern periods, at least one RO group exists and is associated with each downlink signal having a particular index, and the RO group is related to the non-enhanced-duplex uplink resource and the enhanced-duplex uplink resource, or the determination of the RO group is determination of a resource for PRACH repetition transmission by a terminal that supports enhanced duplex; and
in one or more first association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex.

21. The apparatus according to any one of claims 17 to 20, wherein the second association pattern period satisfies at least one of the following:
different association orders or different association methods of the downlink signal to the RO are used for at least two second association pattern periods;
in one or more N times of second association pattern periods, at least one RO group exists and is associated with each downlink signal having a particular index, and the RO group is only related to the non-enhanced-duplex uplink resource, or the determination of the RO group is the determination of the resource for the PRACH repetition transmission by the terminal that does not support enhanced duplex; and N is an integer greater than 1;
in one or more M times of second association pattern periods, at least one RO group exists and is associated with each downlink signal having a particular index, and the RO group is related to the non-enhanced-duplex uplink resource and the enhanced-duplex uplink resource, or the determination of the RO group is the determination of the resource for the PRACH repetition transmission by the terminal that supports enhanced duplex; and M is an integer greater than 1; and
in one or more P times of second association pattern periods, at least one RO group exists and is associated with each downlink signal having a particular index, and the RO group is only related to the enhanced-duplex uplink resource, or the determination of the RO group is the determination of the resource for the PRACH repetition transmission by the terminal that supports enhanced duplex; and P is an integer greater than 1.

22. An apparatus for configuration, comprising:
a sending module configured to send configuration information to a terminal, wherein
the configuration information comprises at least one of the following:
first configuration information related to a preamble on an RO; and
second configuration information used for configuring a PRACH resource of a first RO, wherein the first RO is used for PRACH repetition transmission by a terminal that supports one or more types of enhanced duplex and PRACH repetition transmission by a terminal that does not support enhanced duplex, and the PRACH resource is used for the PRACH repetition transmission by the terminal that does not support enhanced duplex;
third configuration information used for configuring a time window of an RO group, wherein the time window comprises one or more first association pattern periods of a downlink signal to the RO, or the time window comprises one or more second association pattern periods of the downlink signal to the RO; and
fourth configuration information used for configuring an RO resource on an enhanced-duplex uplink resource or a non-enhanced-duplex uplink resource.

23. A terminal, comprising a processor and a memory, wherein the memory stores a program or instructions capable of being run on the processor, and the program or the instructions, when executed by the processor, implement steps of the method for determining a resource according to any one of claims 1 to 10.

24. A network-side device, comprising a processor and a memory, wherein the memory stores a program or instructions capable of being run on the processor, and the program or the instructions, when executed by the processor, implement steps of the method for configuration according to any one of claims 11 to 16.

25. A readable storage medium, storing a program or instructions, wherein the program or the instructions, when executed by a processor, implement steps of the method for determining a resource according to any one of claims 1 to 10, or implement steps of the method for configuration according to any one of claims 11 to 16.
